(19) Europäisches Patentamt
European Patent Office
Office européen des brevets

(11) **EP 4 281 815 B1**

(12) **EUROPEAN PATENT SPECIFICATION**

(45) Date of publication and mention
of the grant of the patent:
**13.08.2025  Bulletin 2025/33**

(21) Application number: **21709464.8**

(22) Date of filing: **25.01.2021**

(51) International Patent Classification (IPC):
*G01V 1/30* (2006.01)

(52) Cooperative Patent Classification (CPC):
**G01V 1/301;** G01V 2210/641; G01V 2210/643;
G01V 2210/74

(86) International application number:
**PCT/IB2021/000062**

(87) International publication number:
**WO 2022/157532 (28.07.2022 Gazette 2022/30)**

(54) **METHOD AND SYSTEM FOR PROCESSING SEISMIC IMAGES TO PROGRESSIVELY ENHANCE AN RGT IMAGE OF A GEOLOGICAL FORMATION**

VERFAHREN UND SYSTEM ZUR VERARBEITUNG SEISMISCHER BILDER ZUR PROGRESSIVEN VERSTÄRKUNG EINES RGT-BILDES EINER GEOLOGISCHEN FORMATION

PROCÉDÉ ET SYSTÈME DE TRAITEMENT D'IMAGES SISMIQUES POUR AMÉLIORER PROGRESSIVEMENT UNE IMAGE RGT D'UNE FORMATION GÉOLOGIQUE

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR

(43) Date of publication of application:
**29.11.2023  Bulletin 2023/48**

(73) Proprietor: **TOTALENERGIES ONETECH**
**92400 Courbevoie (FR)**

(72) Inventor: **KESKES, Noomane**
**64018 Pau Cedex (FR)**

(74) Representative: **Plasseraud IP**
**104 Rue de Richelieu**
**CS92104**
**75080 Paris Cedex 02 (FR)**

(56) References cited:
CN-A- 112 180 468    US-A1- 2006 247 858

• "CWP", 1 September 2013, SOCIETY OF
EXPLORATION GEOPHYSICISTS, article WU
XINMING ET AL: "Extracting horizons and
sequence boundaries from 3D seismic images",
pages: 1440 - 1445, XP055782430, DOI: 10.1190/
segam2013-0296.1

• XINMING WU AND DAVE HALE: "Horizon
volumes with interpreted constraints",
GEOPHYSICS, SOCIETY OF EXPLORATION
GEOPHYSICISTS, US, vol. 80, no. 2, 1 March 2015
(2015-03-01), pages IM21 - IM33, XP001594504,
ISSN: 0016-8033, [retrieved on 20150202], DOI:
10.1190/GEO2014-0212.1

• ALUMBAUGH DAVID ET AL: "Automatic horizon
picking using multiple seismic attributes", SEG
TECHNICAL PROGRAM EXPANDED
ABSTRACTS 2018, 27 August 2018 (2018-08-27),
pages 1683 - 1687, XP055849242, DOI: 10.1190/
segam2018-2997698.1

• MOUNIROU AROUNA MOCTAR ET AL: "Robust
and adaptive approaches for Relative Geologic
Time Estimation", JOURNAL OF APPLIED
GEOPHYSICS, ELSEVIER, AMSTERDAM, NL,
vol. 159, 7 August 2018 (2018-08-07), pages 157 -
172, XP085551185, ISSN: 0926-9851, DOI:
10.1016/J.JAPPGEO.2018.07.013

**Description**

**TECHNICAL FIELD**

The present disclosure relates to the processing of seismic images of a geological formation in order to obtain a chrono-stratigraphic representation of the geological formation, a.k.a. relative geological time, RGT, image of the geological formation.

**BACKGROUND ART**

It is known, especially in oil exploration, to determine the position of oil reservoirs from the results of geophysical measurements carried out from the surface or in well bores.

According to the technology of reflection seismology, these seismic measurements involve emitting a wave (e.g. acoustic waves) into the subsurface and measuring a signal comprising a plurality of echoes of the wave on geological structures being investigated. These structures are typically surfaces separating distinct materials, faults, etc. Other measurements may be carried out at wells bores.

Chrono-stratigraphic analysis (or sequence stratigraphic analysis) is very important to understand basin evolution, predict the sedimentary facies distribution for both hydrocarbon exploration and development. This analysis is based on the fundamental assumption that seismic reflectors are surfaces of chrono-stratigraphic significance. This assumption implies that an individual seismic reflector is a "time-line" through a depositional basin that represents a surface of the same geological age (i.e. an isochronous surface in geological time).

A seismic image (or seismic section) comprises a juxtaposition in a volume of sampled one-dimensional signals referred to as seismic traces. In the seismic image, the value of a pixel (a.k.a. voxel for 3D images) is proportional to the seismic amplitude represented by seismic traces.

Computing a chrono-stratigraphic representation of a seismic image often requires determining seismic horizon surfaces of the seismic image, wherein a seismic horizon surface corresponds to an estimated isochronous surface of the geological formation. Such seismic horizon surfaces can be used to determine an RGT image of the geological formation, i.e. an image in which each pixel provides an estimated geological age for the portion of the geological formation represented by said pixel. The RGT image is referred to as "relative" because the purpose of the RGT image is mainly to be able to compare the estimated geological ages of different pixels, in order to e.g. identify portions of the geological formation that have the same estimated geological age. Also, in practice, it is usually not possible to estimate an absolute geological age of any given portion of the geological formation.

[LOMASK2006] describes a method for determining seismic horizon surfaces based on a seismic image, by computing the local seismic dip at each pixel of the seismic image and searching iteratively for surfaces having local gradients approaching the local seismic dips. [WU2013] describes methods for seismic horizon and sequence boundary extraction from seismic images, using control points, and more in particular, [WU2013] introduces a globally optimal method to efficiently extract a horizon from a seismic image, and then uses scattered control points as constraints to enable the horizon-extraction method to extract sequence boundaries. Finally, [WU2013] proposes an active-surface method to refine the globally optimized horizons to align with amplitude peaks or troughs and thereby reveal more geologic details.

However, seismic images have generally very large dimensions and represent a significant amount of data which may take a significant time to process, especially with an iterative scheme such as the one proposed in [LOMASK2006]. There is a need for a solution which would reduce the time required for obtaining an RGT image suitable for starting the analysis of the geological formation.

**SUMMARY**

The present disclosure aims at improving the situation. In particular, the present disclosure aims at overcoming at least some of the limitations of the prior art discussed above, by proposing a solution enabling to obtain more quickly an RGT image suitable for starting the analysis of the geological formation.

According to a first aspect, the present disclosure relates to a computer implemented method for processing a seismic image comprising two horizontal dimensions and one vertical dimension, the seismic image comprising a set of seismic traces extending each along the vertical dimension, said set of seismic traces defining a survey volume in the seismic image, said survey volume having a vertical envelope defined by boundary seismic traces, said method comprising:

- selecting an initial subset of seismic traces among the set of seismic traces, said initial subset comprising a plurality of boundary seismic traces and a plurality of non-boundary seismic traces;
- determining a plurality of seeds for each of the seismic traces of the initial subset;

- determining a seismic horizon surface for each seed of each seismic trace of the initial subset;
- determining an intermediate relative geological time, RGT, image based on the seismic horizon surfaces determined for the initial subset of seismic traces;
- updating the intermediate RGT image by using additional seismic horizon surfaces determined for seeds of seismic traces of a subsequent subset corresponding to the seismic traces which are not in the initial subset, in order to obtain a final RGT image.

The processing method proposes to accelerate the obtention of an intermediate RGT image by considering initially only a restricted number of seismic traces among the whole set of seismic images.

Hence, the intermediate RGT image, in that it is computed based on a restricted number of seismic traces, may be computed and displayed more quickly for starting the analysis of the geological formation.

However, in order to maintain an acceptable level of accuracy despite the fact that only a reduced number of seismic traces is considered for computing the intermediate RGT image, the initial subset comprises both a plurality of boundary seismic traces and a plurality of non-boundary seismic traces. Doing so, the seismic traces of the initial subset may be distributed throughout the survey volume, and not concentrated in a restricted portion of the survey volume. Hence, the intermediate RGT image is computed based on observations (seismic traces) that are distributed throughout the survey volume, and in particular based on a plurality of observations at the vertical envelope of the survey volume, which limits the accuracy degradation inherent to the fact that only a reduced number (initial subset) of seismic traces is considered.

Also, a plurality of seeds is determined for each seismic trace and a seismic horizon surface is determined for each seed. By doing so, the seismic horizon surfaces obtained for a seismic trace may be distributed along said seismic trace (vertical dimension). Hence, the intermediate RGT image is computed based on seismic horizon surfaces that are distributed along the vertical dimension, which further limits the accuracy degradation inherent to the fact that only a reduced number (initial subset) of seismic traces is considered.

For the reasons above, the intermediate RGT image may be obtained and displayed quickly for starting the analysis of the geological formation, with a sufficient accuracy for at least starting a high-level analysis of the geological formation.

In parallel, the processing of the seismic image continues in order to update the intermediate RGT image by considering further seismic traces, thereby enhancing the intermediate RGT image by progressively increasing the number of seismic traces used for its computation. Hence, enhanced versions of the intermediate RGT image can be progressively obtained and displayed during the analysis of the geological formation. In the end, the final RGT image may have the same accuracy as in the prior art, however the analysis of the geological image may start earlier, based on an intermediate RGT image.

In specific embodiments, the processing method can further comprise one or more of the following features, considered either alone or in any technically possible combination.

In specific embodiments, selecting the initial subset comprises:

- selecting a deterministic subset of seismic traces by selecting seismic traces in the survey volume in a deterministic manner;
- selecting a random subset of seismic traces by selecting seismic traces in the survey volume in a random manner;

wherein the initial subset comprises the deterministic subset and the random subset.

Basically, the deterministic subset aims at providing at least some seismic traces that are distributed throughout the survey volume, for instance selected according to a predetermined horizontal grid, for instance a rectangular or a radial grid. In turn, the random subset aims at providing traces that are chosen arbitrarily in the survey volume.

Indeed, the inventors have found that such a combination of regularly distributed seismic traces (deterministic subset) and arbitrarily chosen seismic traces (random subset) enables to statistically improve the accuracy achievable for an intermediate RGT image. Indeed, the deterministic subset ensures that the seismic traces of the initial subset are not all concentrated in a restricted portion of the survey volume, while the random subset might enable to observe details of the seismic image that might be missed if considering only regularly distributed seismic traces for the initial subset.

In specific embodiments, the deterministic subset comprises a plurality of boundary seismic traces.

In specific embodiments, the plurality of boundary seismic traces of the deterministic subset comprise at least $N_{st}$ boundary seismic traces, $N_{st} \geq 4$, that are regularly distributed on the vertical envelope of the survey volume.

In specific embodiments, the deterministic subset comprises a plurality of non-boundary seismic traces which are regularly distributed inside the vertical envelope.

In specific embodiments, all or part of the boundary and/or non-boundary seismic traces of the deterministic subset are selected based on a predetermined regular horizontal rectangular grid or a predetermined regular horizontal radial grid.

In specific embodiments, the deterministic subset comprises seismic traces located on $K_p$ non-parallel vertical planes intersecting at a common reference axis inside the survey volume, wherein the seismic traces of the deterministic subset which are located on the $K_p$ vertical planes comprise, for each of the $K_p$ vertical planes, the boundary seismic traces in said vertical plane and at least one additional non-boundary seismic trace in said vertical plane.

In specific embodiments, the deterministic subset comprises the seismic trace which corresponds to the common reference axis.

In specific embodiments, the deterministic subset comprises non-boundary seismic traces located each on a vertical plane among the $K_p$ non-parallel vertical planes, at equal distance between the reference axis and a boundary seismic trace located on said vertical plane.

In specific embodiments, updating the intermediate RGT image is performed iteratively by progressively using additional seismic horizon surfaces determined for seeds of further seismic traces of the subsequent subset, until a stop criterion is verified, thereby obtaining the final RGT image.

In specific embodiments, the one or more further seismic traces used at each iteration for updating the intermediate RGT image are seismic traces selected randomly in the subsequent subset.

In specific embodiments, the seismic traces used for updating the intermediate RGT image are seismic traces selected randomly among the seismic traces of the subsequent subset.

In specific embodiments, each seed of a seismic trace used for determining a seismic horizon surface is a pixel which corresponds to a local extremum of said seismic trace.

In specific embodiments, the seeds determined for the seismic traces of the initial subset correspond to all the pixels which correspond to local extrema of said seismic traces of the initial subset. Considering all the local extrema for the seeds ensures that the seeds (and the seismic horizon surfaces) are distributed along the whole vertical dimension.

According to a second aspect, the present disclosure relates to a computer program product comprising instructions which, when executed by at least one processor, configure said at least one processor to carry out a processing method according to any one of the embodiments of the present disclosure.

According to a third aspect, the present disclosure relates to a computer-readable storage medium comprising instructions which, when executed by at least one processor, configure said at least one processor to carry out a processing method according to any one of the embodiments of the present disclosure.

According to a fourth aspect, the present disclosure relates to a computer system for processing a seismic image, said computer system comprising at least one processor configured to carry out a processing method according to any one of the embodiments of the present disclosure.

## BRIEF DESCRIPTION OF DRAWINGS

The invention will be better understood upon reading the following description, given as an example that is in no way limiting, and made in reference to the figures which show:

- Figure 1: an example of seismic image;
- Figure 2: a schematic representation of a survey volume composed of seismic traces in a seismic image;
- Figure 3: a flow chart illustrating the main steps of a method for processing a seismic image;
- Figure 4: a schematic representation of an example of horizontal grid for selecting boundary seismic traces to be used for computing an intermediate RGT image;
- Figure 5: a schematic representation of an example of horizontal grid for selecting boundary and non-boundary seismic traces to be used for computing an intermediate RGT image;
- Figure 6: schematic representations of examples of horizontal grids for selecting non-boundary seismic traces to be used for computing an intermediate RGT image;
- Figure 7: schematic representations of examples of horizontal grids for selecting both boundary and non-boundary seismic traces to be used for computing an intermediate RGT image;
- Figure 8: a flow chart illustrating the main steps of a preferred embodiment of a step of selecting an initial subset of seismic traces;
- Figure 9: a schematic representation of an example of a deterministic subset and of a random subset of seismic traces;
- Figure 10: examples of intermediate and final RGT images.

In these figures, identical references from one figure to another designate identical or analogous elements. For reasons of clarity, the elements shown are not to scale, unless explicitly stated otherwise.

## DESCRIPTION OF EMBODIMENTS

As discussed above, the present disclosure relates inter alia to a method 30 for processing seismic images.

A seismic image represents a picture of the subsoil arising from a seismic exploration survey. The seismic image comprises at least two dimensions which may comprise at least one horizontal dimension (which usually uses a distance scale, expressed e.g. in meters) and one vertical dimension (which usually uses a distance scale or a time scale, expressed e.g. in seconds). Hence, the seismic image may correspond to a 3D seismic image (with two horizontal dimensions and one vertical dimension) or to a 2D seismic image (with one horizontal dimension and one vertical dimension).

It is emphasized that the expressions "horizontal dimension" and "vertical dimension" are not be interpreted as requiring these dimensions to be respectively strictly horizontal and strictly vertical. These expressions mean that one of the dimensions, referred to as "vertical dimension", is representative of the depth of the geological formation, and that the other dimensions, referred to as "horizontal dimensions" are both orthogonal to the vertical dimension.

The seismic image is composed of pixels which may be 2D in case of a 2D seismic image or 3D (voxels) in case of a 3D seismic image. The pixels are regularly distributed according to a horizontal resolution on each horizontal dimension and a vertical resolution on the vertical dimension. The seismic image comprises, along each horizontal dimension:

- a number of columns of pixels which is equal to the quotient of the horizontal extension along this horizontal dimension divided by the horizontal resolution along this horizontal dimension; and
- a number of pixels per column which is equal to the quotient of the vertical extension divided by the vertical resolution.

Each pixel is associated with a seismic value which may be a gray value, for instance between 0 and 255 (or 65535). Each seismic value is representative of the amplitude of the seismic signal measured for the portion of the geological formation represented by the corresponding pixel.

The present disclosure may be applied to a 2D seismic image or a 3D seismic image. However, it is particularly advantageous when applied to a 3D seismic image, since a 3D seismic image represents a more significant amount of data to process than a 2D seismic image. In the following description, the seismic image is considered to be a 3D seismic image.

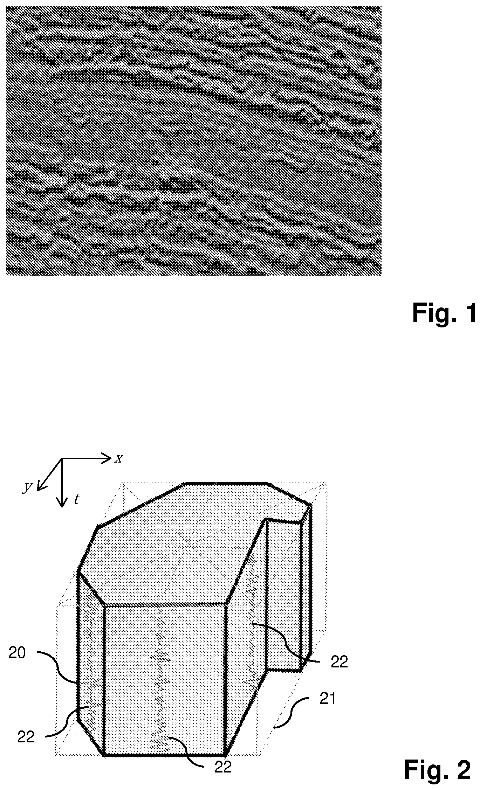

Figure 1 represents an example of seismic image. More specifically, figure 1 represents a 2D section of the seismic image, in a vertical plane comprising one of its horizontal dimensions. As can be seen in figure 1, the seismic values highlight the composition of the geological formation, since high amplitude absolute seismic values are usually associated to strong seismic reflectors, which are usually located at the interfaces between geological layers having different acoustic impedances.

The measured seismic values correspond to one-dimensional signals, referred to as "seismic traces", which correspond to columns of the seismic image. During a seismic exploration survey, a set of seismic traces is obtained, which corresponds to adjacent columns of the seismic image, but which do not necessarily cover all the columns of the seismic image.

Indeed, when performing a seismic exploration survey, it is not always possible or necessary to measure seismic traces for any possible position at the surface. Usually, the seismic traces are measured for positions that are located in a predetermined area at the surface, such that the seismic traces measured can all be considered to lie inside a vertical envelope defined by projecting said predetermined area along the vertical dimension.

Figure 2 represents schematically an example of vertical envelope 20. As can be seen in figure 2, the volume defined by the vertical envelope 20 is not a rectangular cuboid volume. Of course, the seismic image corresponds preferably to a rectangular cuboid volume 21, such that the pixels of some of the columns of the seismic image may have undefined values (usually set to arbitrary values) because no seismic trace is available for these columns.

Hence, the set of seismic traces defines a survey volume in the seismic image, which corresponds to all the adjacent columns for which seismic traces are available, and which is bounded horizontally by the vertical envelope 20. The seismic traces of the set which are on the vertical envelope 20 may be referred to as "boundary" seismic traces in the sequel, while the other seismic traces, which are not on the vertical envelope 20 and which are located inside the survey volume (i.e. surrounded by boundary seismic traces), may be referred to as "non-boundary" seismic traces in the sequel. Figure 2 represents also schematically examples of boundary seismic traces 22.

Of course, the survey volume may be, in some cases, identical to the rectangular cuboid volume 21 of the seismic image but, in practice, the survey volume has usually a more complex geometry that is different from and included in the rectangular cuboid volume 21, as illustrated by figure 2.

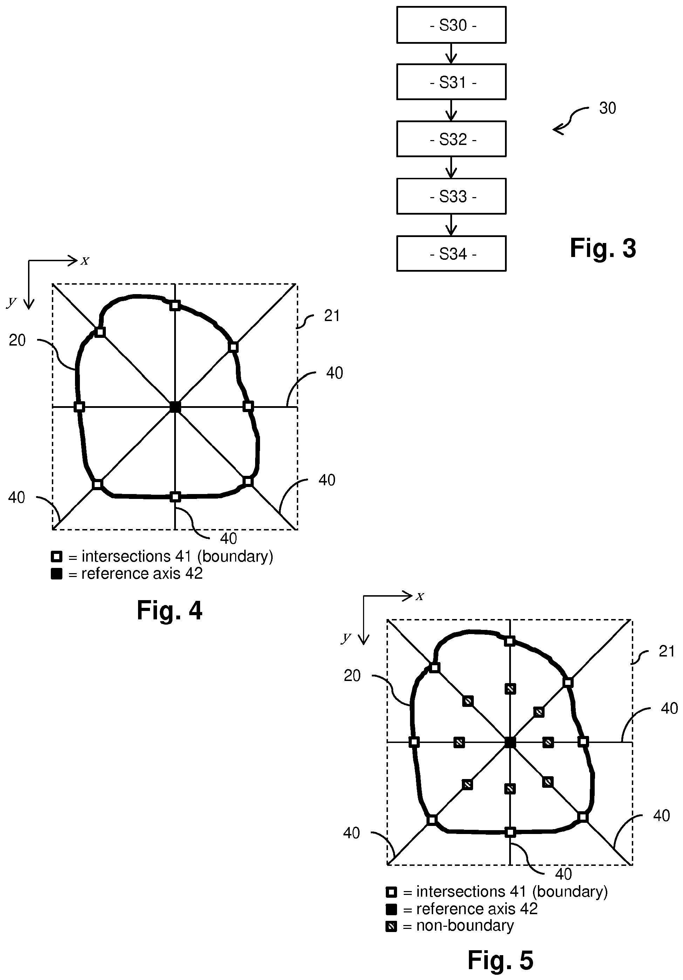

Figure 3 represents schematically the main steps of an exemplary embodiment of a method 30 for processing a seismic image.

The processing method 30 is carried out by a computer system (not represented in the figures). In preferred embodiments, the computer system comprises one or more processors (which may belong to a same computer or to different computers) and storage means (magnetic hard disk, optical disk, electronic memory, or any computer readable storage medium) in which a computer program product is stored, in the form of a set of program-code instructions to be executed in order to implement all or part of the steps of the processing method 30. Alternatively, or in combination thereof, the computer system can comprise one or more programmable logic circuits (FPGA, PLD, etc.), and/or one or more specialized integrated circuits (ASIC), etc., adapted for implementing all or part of said steps of the processing method 30. In other words, the computer system comprises a set of means configured by software (specific computer program product) and/or by hardware (processor, FPGA, PLD, ASIC, etc.) to implement the steps of the processing method 30.

As illustrated by figure 3, the processing method 30 comprises mainly the following steps, which will be detailed hereinafter:

- a step S30 of selecting an initial subset of seismic traces among the set of seismic traces;
- a step S31 of determining a plurality of seeds for each of the seismic traces of the initial subset;
- a step S32 of determining a seismic horizon surface for each seed of each seismic trace of the initial subset;
- a step S33 of determining an intermediate RGT image based on the seismic horizon surfaces determined for the initial subset of seismic traces;
- a step S34 of updating the intermediate RGT image by using additional seismic traces from a subsequent subset corresponding to the seismic traces which are not in the initial subset.

During step S30, an initial subset of seismic traces is selected among the whole set of seismic traces.

The number of seismic traces in the initial subset is preferably significantly lower than the number of seismic traces of the whole set. For instance, while a set of seismic traces may comprise hundreds or even thousands of seismic traces, the initial subset comprises preferably less than a hundred seismic traces, even more preferably less than fifty (50) or less than twenty (20) seismic traces.

The initial subset comprises preferably a plurality of boundary seismic traces and a plurality of non-boundary seismic traces, in order to have the selected seismic traces distributed in the survey volume instead of having seismic traces concentrated in a restricted portion of the seismic image.

In preferred embodiments, at least some of the boundary seismic traces of the initial subset are regularly distributed on the vertical envelope 20 of the survey volume. Preferably, the initial subset comprises $N_{st}$ boundary seismic traces, $N_{st} \geq 4$, or preferably $N_{st} \geq 8$, that are regularly distributed on the vertical envelope 20 of the survey volume. For instance, these $N_{st}$ boundary seismic traces may be positioned on non-parallel vertical planes 40 which intersect at a common reference axis 42 inside the survey volume, wherein said vertical planes 40 are such that the angle, between two vertical planes on which are located two adjacent (along the vertical envelope 20) boundary seismic traces among the $N_{st}$ boundary seismic traces, is higher than $360/(N_{st} + 1)$ degrees and lower than $360/(N_{st} - 1)$ degrees. For instance, the reference axis 42 may be the column located at the center of the seismic image, if it is included in the survey volume. For instance, assuming that the seismic image comprises a horizontal dimension $x$ with $N_x$ pixels and a horizontal dimension $y$ with $N_y$ pixels, then the reference axis 42 may correspond to the column having the position $(N_x/2, N_y/2)$ in the horizontal plane $(x, y)$. According to another example, it is possible to compute a reference position in the horizontal plane $(x, y)$ which corresponds to the mean value of the positions in the horizontal plane (x,y) of all the boundary seismic traces of the set, and the reference axis 42 may correspond to the column located at the reference position in the horizontal plane (x,y), etc. Preferably, the seismic trace which corresponds to the reference axis 42 is included in the initial subset.

Figure 4 represents schematically an example of regularly distributed boundary seismic traces. In this example, $N_{st} = 8$ and the $N_{st}$ boundary seismic traces are located on $K_p = 4$ vertical planes 40 which intersect at a reference axis 42 which corresponds to the column at the center of the seismic image, which is in the survey volume in this example. These $K_p$ vertical planes 40 have regular angular spacings of $180/K_p = 45$ degrees between them, and each vertical plane 40 comprises two of the $N_{st}$ boundary seismic traces which correspond to the intersections 41 between said vertical plane and the vertical envelope 20. In figure 4, the angular spacings are considered to be all identical, mainly because the rectangular cuboid volume 21 is assumed to have a square section and because the vertical planes 40 join the opposite corners of the square section and the opposite midpoints of the sides of the square section. With a rectangular section and the same configuration for the vertical planes 40, the angular spacings may take two possible values: a first (higher) value with the vertical plane 40 joining the midpoints of the lengths of the rectangular section and a second (lower) value with the vertical plane 40 joining the midpoints of the widths of the rectangular section.

In preferred embodiments, which may be considered alone or in combination, at least some of the non-boundary seismic traces of the initial subset are regularly distributed inside the vertical envelope 20. Hence, the goal is to have at least some of the non-boundary seismic traces of the initial subset that have a homogeneous distribution in the survey volume.

For instance, if we consider $N_{st}$ regularly distributed boundary seismic traces located on $K_p$ vertical planes 40 which intersect at a reference axis 42, then it is possible to select regularly distributed non-boundary seismic traces as seismic traces located in the $K_p$ vertical planes, each of these regularly distributed non-boundary seismic traces being located at an equal distance between one of the $N_{st}$ regularly distributed boundary seismic traces and the reference axis 42. Hence, $N_{st}$ non-boundary seismic traces are selected, thereby providing $(2N_{st} + 1)$ regularly distributed boundary and non-boundary seismic traces by including the reference axis 42.

Figure 5 represents schematically an example of regularly distributed boundary and non-boundary seismic traces. Basically, figure 5 represents the $N_{st} = 8$ regularly distributed boundary seismic traces of figure 4, located on the $K_p = 4$ vertical planes 40 which intersect at the reference axis 42 which corresponds to the column at the center of the seismic image. Figure 5 represents also $N_{st} = 8$ regularly distributed non-boundary seismic traces which are located at an equal distance between the reference axis 42 and respective boundary seismic traces. Basically, each of these $N_{st}$ non-boundary seismic traces corresponds to the column located at the position in the horizontal plane $(x, y)$ which corresponds to the middle of the segment defined by the respective positions in the horizontal plane $(x, y)$ of the reference axis 42 and of one of the $N_{st}$ boundary seismic traces. In this example, the initial subset comprises $(2N_{st} + 1) = 17$ regularly distributed seismic traces with the reference axis 42.

In another example, it is possible to predefine a horizontal grid of possible positions in a horizontal plane $(x, y)$, and to select at least some of the seismic traces of the initial subset based on such a predefined horizontal grid. A horizontal grid may be defined by a predetermined set of vertical planes, each vertical plane comprising predetermined points which correspond to possible positions for the regularly distributed non-boundary seismic traces. For instance, the horizontal grid may be a rectangular grid or a radial grid, as described below. Also, a horizontal grid is referred to as "regular" if all the pairs of adjacent possible positions of a same vertical plane are separated by the same predetermined linear spacing. However, the value of the linear spacing may vary from a vertical plane to another. Preferably, the non-boundary seismic traces of the initial subset which are regularly distributed inside the vertical envelope 20 are selected based on a regular horizontal grid.

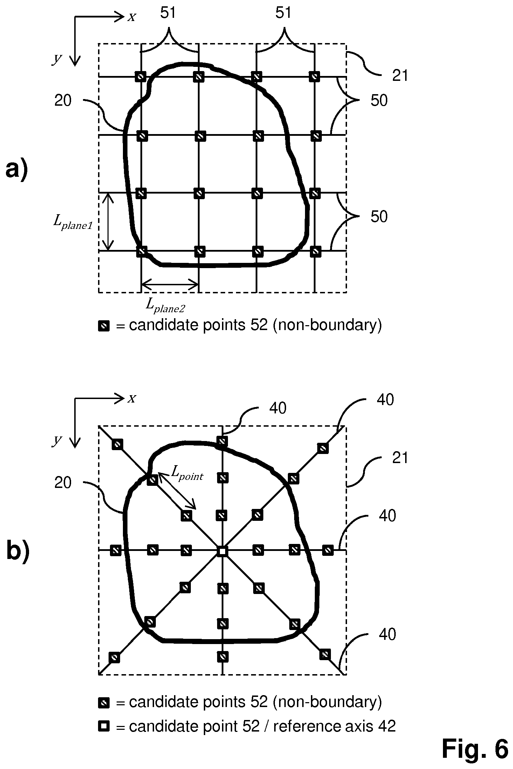

Part a) of figure 6 represents a view in a horizontal plane $(x, y)$ of a first example in which the horizontal grid is a regular rectangular grid defined by two groups of vertical planes 50, 51. A first group comprises parallel vertical planes 50 with a same linear spacing $L_{plane1}$ between them. A second group comprises parallel vertical planes 51 with a same linear spacing $L_{plane2}$ between them. The vertical planes 50 of the first group are orthogonal to the vertical planes 51 of the second group. The intersections between the vertical planes 50, 51 correspond to the points 52 defining candidate positions for non-boundary seismic traces of the initial subset. In each vertical plane 51 of the first group, all the pairs of adjacent points 52 are separated by the linear spacing $L_{plane2}$. In each vertical plane 51 of the second group, all the pairs of adjacent points 52 are separated by the linear spacing $L_{plane1}$. In this example, the linear spacings $L_{plane1}$ and $L_{plane2}$ are identical, but it is also possible to use different linear spacings in other examples. As can be seen in part a) of figure 6, not all points 52 are located inside the vertical envelope 20, and the initial subset may include all the non-boundary seismic traces which are located at the positions of the points 52 which are inside the vertical envelope 20.

Part b) of figure 6 represents a view in a horizontal plane $(x, y)$ of a second example in which the horizontal grid is a regular radial grid defined by $K_p$ vertical planes 40 which are non-parallel and intersect at a common reference axis 42. In this example, $K_p = 4$ and the reference axis 42 corresponds to the column at the center of the seismic image, which is in the survey volume in this example. In this example, these vertical planes 40 have regular angular spacings of $180/K_p$ degrees between, and each vertical plane 40 comprises predefined points 52 separated by a same linear spacing $L_{point}$ between them (the linear spacing $L_{point}$ may vary from a vertical plane to another, as it is the case in part b) of figure 6). In this example, each vertical plane 40 comprises a point 52 at the position of the reference axis 42. As can be seen in part b) of figure 6, not all points 52 are located inside the vertical envelope 20, and the initial subset may include all the non-boundary seismic traces which are located at the positions of the points 52 which are inside the vertical envelope 20.

Preferably, the initial subset comprises both regularly distributed boundary seismic traces and regularly distributed non-boundary seismic traces. For instance, it is possible to consider a regular rectangular grid or a regular radial grid to define the regularly-distributed non-boundary seismic traces, and to define the regularly distributed seismic traces as the intersections of the vertical planes defining the horizontal grid with the vertical envelope 20.

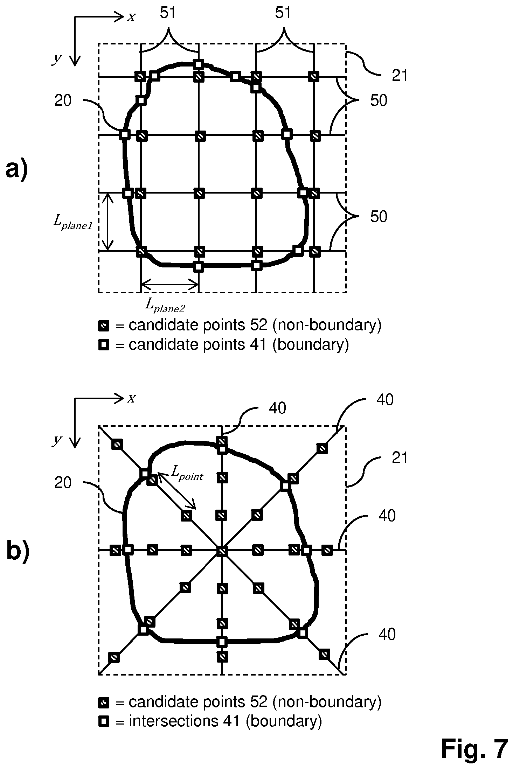

For instance, part a) of figure 7 represents the same regular rectangular grid as part a) of figure 6. Preferably, the initial subset may include all the non-boundary seismic traces which are located at the positions of the points 52 which are inside the vertical envelope 20. Also, the initial subset may include all the boundary seismic traces which are located at the positions of the intersections 41 between the vertical planes 50, 51 and the vertical envelope 20.

Part b) of figure 7 represents the same regular radial grid as part b) of figure 6. Preferably, the initial subset may include all the non-boundary seismic traces which are located at the positions of the points 52 which are inside the vertical envelope 20. Also, the initial subset may include all the boundary seismic traces which are located at the positions of the intersections 41 between the vertical planes 40 and the vertical envelope 20.

In some embodiments, when a point 52 is very close to an intersection 41, it is possible to keep in the initial subset only one among the non-boundary seismic trace at the position of said point 52 and the boundary seismic trace at the position of said intersection 41, preferably the boundary seismic trace.

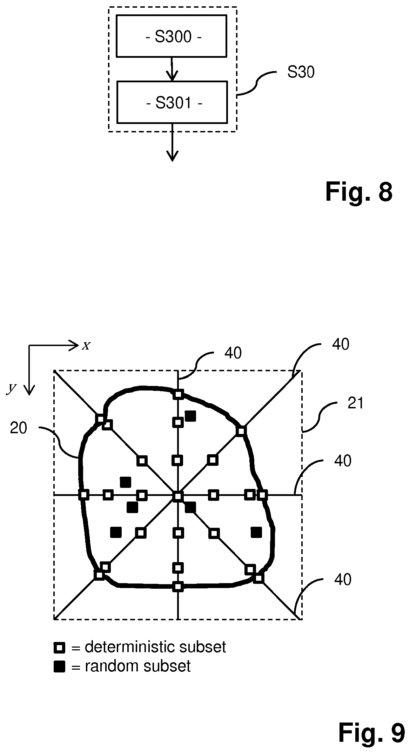

Figure 8 represents schematically the main steps of a preferred embodiment of the step S30 of determining the initial subset. In this example, the step S30 of determining the initial subset comprises:

- a step S300 of selecting a deterministic subset of seismic traces by selecting seismic traces in the survey volume in a deterministic manner;
- a step S301 of selecting a random subset of seismic traces by selecting seismic traces in the survey volume in a (pseudo-)random manner.

The initial subset comprises both the deterministic subset and the random subset.

Basically, the deterministic subset aims at providing at least some seismic traces that are distributed throughout the survey volume. Hence, all that has been described hereinabove for selecting boundary and/or non-boundary seismic traces that are regularly distributed in the survey volume can be used during the step S300 of selecting the deterministic subset.

In turn, the random subset aims at providing traces that are chosen arbitrarily in the survey volume, in a (pseudo-) random manner.

Indeed, the inventors have found that such a combination of regularly distributed seismic traces (deterministic subset) and arbitrarily chosen seismic traces (random subset) enables to statistically improve the accuracy achievable for an intermediate RGT image.

Figure 9 represents a view in a horizontal plane $(x, y)$ of an example of initial subset comprising a deterministic subset and a random subset, based on the example of part b) of figure 7. The deterministic subset corresponds to the non-boundary seismic traces which are located at the points 52 of the radial grid which are inside the vertical envelope 20, and to the boundary seismic traces which are located at the intersections 41 between the vertical planes 40 and the vertical envelope 20. The random subset comprises seismic traces which are located at positions which are chosen in a (pseudo-) random manner inside the survey volume.

When the seismic traces of the initial subset have been selected, the processing method 30 comprises a step S31 of determining a plurality of seeds for each of the seismic traces of the initial subset.

For instance, the seeds determined for a seismic trace are pixels which correspond to local extrema of said seismic trace. The seeds may comprise pixels which correspond only to local minima of the seismic trace, or only to local maxima of the seismic trace or, preferably, to both local minima and local maxima of the seismic trace. Preferably, the seeds comprise all the pixels which correspond to the local extrema considered (local minima or local maxima or both). In other embodiments, the seeds may comprise only a subset of the pixels which correspond to the local extrema considered (local minima or local maxima or both), for instance the subset of pixels corresponding to the most significant local extrema (e.g. those having an absolute value higher than a predetermined threshold). For instance, when considering a relatively small initial subset comprising around ten (10) seismic traces, the total number of local extrema may still be higher than 500 for a typical seismic image.

Then the processing method 30 comprises a step S32 of determining a seismic horizon surface for each seed of each seismic trace of the initial subset. Hence, each seismic horizon surface determined comprises the seed it is associated with. This step S32 may use any method know to the skilled person for determining seismic horizon surfaces, for instance the method described in [LOMASK2006], in the patent applications EP 20306131.2 and FR 2869693, etc.

Then the processing method 30 comprises a step S33 of determining an intermediate RGT image based on the seismic horizon surfaces determined for the initial subset of seismic traces.

We assume that $M_h$ seismic horizon surfaces $\tau^n$ ($1 \leq n \leq M_h$) have been determined for the initial subset. Assuming that the seismic image comprises a horizontal dimension $x$ with $N_x$ pixels, a horizontal dimension $y$ with $N_y$ pixels and a vertical dimension $t$ with $Nt$ pixels, then the seismic horizon surface $\tau^n$ of index $n$ is the following set of pixels of the seismic image $\{(i,j, \tau^n(i,j)), 1 \leq i \leq N_x, 1 \leq j \leq N_y\}$ (or limited to the pixels which are located inside the survey volume).

For example, the value of each pixel of the intermediate RGT image $RGT_{int}$ may correspond to the number of seismic horizon surfaces that comprise said considered pixel or that comprise any pixel located in the same column as the considered pixel, between the considered pixel and a reference pixel in the same column. The reference pixel on the vertical axis is the pixel of index $k = Nt$ or, preferably, the pixel of index $k = 1$.

For instance, it is possible to compute a stack image $STK$. The value of each pixel of the stack image $STK$ corresponds to the number of seismic horizon surfaces that comprise said considered pixel. We can define a function $Pos(i, j, k, n)$ which is such that:

$$\text{Pos}(i, j, k, n) = \begin{cases} 1 \text{ if } \tau^n(i, j) = k \\ 0 \text{ if } \tau^n(i, j) \neq k \end{cases}$$

Hence, the function Pos($i, j, k, n$) indicates whether the seismic horizon surface $\tau^n$ passes by the pixel having the position $(i, j, k)$. Based on the function Pos($i, j, k, n$), the stack image $STK$ may be computed as follows:

$$STK(i, j, k) = \sum_{n=1}^{M_h} \text{Pos}(i, j, k, n)$$

for each $1 \leq i \leq N_x$, $1 \leq j \leq N_y$, $1 \leq k \leq Nt$, or limited to the pixels which are located inside the survey volume.

Then, assuming that the reference pixel is the pixel of index $k = 1$, the intermediate RGT image $RGT_{int}$ may be

computed as follows:

$$RGT_{int}(i, j, k) = \sum_{l=1}^{k} STK(i, j, l)$$

for each $1 \leq i \leq N_x$, $1 \leq j \leq N_y$, $1 \leq k \leq Nt$, or limited to the pixels which are located inside the survey volume. For the purpose of chrono-stratigraphic analysis, it is possible, in some embodiments, to normalize the intermediate RGT image $RGT_{int}$ by a predetermined reference geological age, such that the maximum value of the pixels of the intermediate RGT image $RGT_{int}$ is equal to the reference geological age. Hence, in the present example, the pixels which represent the deepest portions of the geological formation, at least, will have their values equal to the reference geological age.

Once determined, the intermediate RGT image $RGT_{int}$ may be displayed in order to enable a human interpreter to start analyzing the geological formation.

Then the processing method 30 comprises a step S34 of updating the intermediate RGT image $RGT_{int}$ by using additional seismic horizon surfaces determined for seeds of seismic traces of a subsequent subset, in order to obtain a final RGT image $RGT_{fin}$. The subsequent subset corresponds to the seismic traces of the set of seismic traces of the survey volume which are not in the initial subset, and the final RGT image $RGT_{fin}$ may be computed by using all or only some of the seismic traces of the subsequent subset.

All that has been described hereinabove for determining seeds on the seismic traces and for determining seismic horizon surfaces may be used also for determining the additional seismic horizon surfaces used for updating the intermediate RGT image $RGT_{int}$.

Assuming that $M'_h$ additional seismic horizon surfaces $\tau'^m$ ($1 \leq m \leq M'_h$) are computed for seeds of seismic traces of the subsequent subset, then it is possible to update the stack image $STK$ by computing the function $Pos(i, j, k, m)$ for the additional seismic horizon surfaces $\tau'^m$:

$$Pos(i, j, k, m) = \begin{cases} 1 \text{ if } \tau'^m(i, j) = k \\ 0 \text{ if } \tau'^m(i, j) \neq k \end{cases}$$

The stack image $STK$ may be updated as follows:

$$STK(i, j, k) = STK(i, j, k) + \sum_{m=1}^{M'_h} Pos(i, j, k, m)$$

for each $1 \leq i \leq N_x$, $1 \leq j \leq N_y$, $1 \leq k \leq Nt$, or limited to the pixels which are located inside the survey volume.

Then, the intermediate RGT image $RGT_{int}$ may be updated as follows:

$$RGT_{int}(i, j, k) = \sum_{l=1}^{k} STK(i, j, l)$$

Once no more additional seismic horizon surfaces are to be used for updating the intermediate RGT image $RGT_{int}$, the final RGT image $RGT_{fin}$ is obtained. For example, the final RGT image $RGT_{fin}$ may be normalized by the reference geological age. Once determined, the final RGT image $RGT_{fin}$ may be displayed in order to enable the human interpreter to continue analyzing the geological formation with an enhanced RGT image.

In preferred embodiments, the seismic traces used for updating the intermediate RGT image $RGT_{int}$, and producing the final RGT image $RGT_{fin}$, are seismic traces selected (pseudo-)randomly among the seismic traces of the subsequent subset.

In some embodiments, updating the intermediate RGT image $RGT_{int}$ is performed iteratively by progressively using additional seismic horizon surfaces determined for seeds of further seismic traces of the subsequent subset, until a stop criterion is verified, thereby obtaining the final RGT image $RGT_{fin}$. For instance, it is possible to select a first subset of seismic traces of the subsequent subset and to compute a first update of the intermediate RGT image $RGT_{int}$, which may be displayed for the human interpreter to continue the analysis based on an enhanced RGT image. Then it is possible to select a second subset of seismic traces of the subsequent subset and to compute a second update of the intermediate RGT image $RGT_{int}$ which may be displayed, etc., until the stop criterion is verified. In practice, any suitable stop criterion may be used, and the choice of a specific stop criterion corresponds to a specific embodiment of the present disclosure. For instance, the stop criterion may be considered verified when the updated intermediate RGT image $RGT_{int}$ remains substantially unchanged from one iteration to another, or when the number of iterations reaches a predetermined maximum number of iterations, or when the number of additional seismic traces considered reaches a predetermined maximum number of additional seismic traces, or when the number of additional seeds considered reaches a predetermined maximum number of additional seeds, etc.

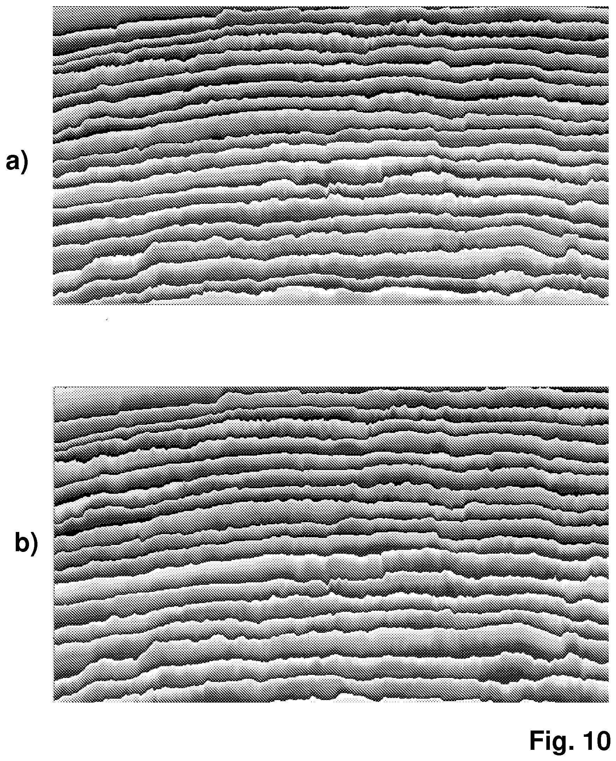

Part a) of figure 10 represents an example of a 2D section of an intermediate RGT image computed for an initial subset comprising around 20 seismic traces (for around 1000 seeds). Part b) of figure 10 represents the same 2D section of the final RGT image computed for around 10000 seeds. As can be seen in figure 10, while the final RGT image has a better contrast/resolution than the intermediate RGT image, the estimated geological ages are not significantly modified, such that the intermediate RGT image may be used to start the analysis of the geological formation.

## REFERENCES

[LOMASK2006] Lomask, et al.: "Flattening without picking" Geophysics Volume 71 Issue 4 (July-August 2006), Pages 13-20
[WU2013] Xinming Wu & Dave Hale: « Extracting horizons and sequence boundaries from 3D seismic images », 2013, Society of Exploration Geophysicists, Pages 223-234.

## Claims

1. - Computer implemented method (30) for processing a seismic image
   comprising two horizontal dimensions and one vertical dimension, and being the result of seismic measurements carried out from the surface or in well bores, the seismic image comprising a set of seismic traces extending each along the vertical dimension, said set of seismic traces defining a survey volume in the seismic image, said survey volume having a vertical envelope defined by boundary seismic traces, said method comprising:

   - (S30) selecting an initial subset of seismic traces among the set of seismic traces, said initial subset comprising a plurality of boundary seismic traces and a plurality of non-boundary seismic traces;
   - (S31) determining a plurality of seeds for each of the seismic traces of the initial subset;
   - (S32) determining a seismic horizon surface for each seed of each seismic trace of the initial subset;
   - (S33) determining an intermediate relative geological time, RGT, image based on the seismic horizon surfaces determined for the initial subset of seismic traces;
   - (S34) updating the intermediate RGT image by using additional seismic horizon surfaces determined for seeds of seismic traces of a subsequent subset corresponding to the seismic traces which are not in the initial subset, in order to obtain a final RGT image.

2. - Method (30) according to claim 1, wherein selecting the initial subset comprises:

   - (S300) selecting a deterministic subset of seismic traces by selecting seismic traces in the survey volume in a deterministic manner;
   - (S301) selecting a random subset of seismic traces by selecting seismic traces in the survey volume in a random manner;

   wherein the initial subset comprises the deterministic subset and the random subset.

3. - Method (30) according to claim 2, wherein the deterministic subset comprises at least $N_{st}$ boundary seismic traces, $N_{st} \geq 4$, that are regularly distributed on the vertical envelope of the survey volume.

4. - Method (30) according to any one of claims 2 to 3, wherein the deterministic subset comprises a plurality of non-boundary seismic traces which are regularly distributed inside the vertical envelope.

5. - Method (xx) according to any one of claims 2 to 4, wherein at least some of the boundary and/or non-boundary seismic traces of the deterministic subset are selected based on a predetermined regular horizontal rectangular grid or a predetermined regular horizontal radial grid.

6. - Method (30) according to any one of claims 2 to 5, wherein the deterministic subset comprises seismic traces located on $K_p$ non-parallel vertical planes intersecting at a common reference axis inside the survey volume, wherein the seismic traces of the deterministic subset which are located on the $K_p$ vertical planes comprise, for each of the $K_p$ vertical planes, the boundary seismic traces in said vertical plane and at least one additional non-boundary seismic trace in said vertical plane.

7.  - Method (30) according to claim 6, wherein the deterministic subset comprises the seismic trace which corresponds to the common reference axis.

8.  - Method (30) according to claim 6 or 7, wherein the deterministic subset comprises non-boundary seismic traces located each on a vertical plane among the $K_p$ non-parallel vertical planes, at equal distance between the reference axis and a boundary seismic trace located on said vertical plane.

9.  - Method (30) according to any one of the preceding claims, wherein updating the intermediate RGT image is performed iteratively by progressively using additional seismic horizon surfaces determined for seeds of further seismic traces of the subsequent subset, until a stop criterion is verified, thereby obtaining the final RGT image.

10. - Method (30) according to any one of the preceding claims, wherein the seismic traces used for updating the intermediate RGT image are seismic traces selected randomly among the seismic traces of the subsequent subset.

11. - Method (30) according to any one of the preceding claims, wherein each seed of a seismic trace used for determining a seismic horizon surface is a pixel which corresponds to a local extremum of said seismic trace.

12. - Method (30) according to claim 11, wherein the seeds determined for the seismic traces of the initial subset correspond to all the pixels which correspond to local extrema of said seismic traces of the initial subset.

13. - Computer program product comprising instructions which, when executed by at least one processor, configure said at least one processor to carry out a processing method (30) according to any one of the preceding claims.

14. - Computer-readable storage medium comprising instructions which, when executed by at least one processor, configure said at least one processor to carry out a processing method (30) according to any one of claims 1 to 12.

15. - Computer system for processing a seismic image, said computer system comprising at least one processor configured to carry out a processing method (30) according to any one of claims 1 to 12.


**Patentansprüche**

1.  - Computerimplementiertes Verfahren (30) zum Verarbeiten eines seismischen Bildes, das zwei horizontale Dimensionen und eine vertikale Dimension umfasst und das Ergebnis von seismischen Messungen ist, die von der Oberfläche aus oder in Bohrlöchern durchgeführt werden, wobei das seismische Bild einen Satz von seismischen Spuren umfasst, die sich jeweils entlang der vertikalen Dimension erstrecken, wobei der Satz von seismischen Spuren ein Begutachtungsvolumen in dem seismischen Bild definiert, wobei das Begutachtungsvolumen eine vertikale Umrandung aufweist, die von umgrenzenden seismischen Spuren definiert wird, das Verfahren umfassend:

    - (S30) Auswählen eines anfänglichen Teilsatzes von seismischen Spuren aus dem Satz von seismischen Spuren, wobei der anfängliche Teilsatz eine Vielzahl von umgrenzenden seismischen Spuren und eine Vielzahl von nicht umgrenzenden seismischen Spuren umfasst;
    - (S31) Bestimmen einer Vielzahl von Anfangswerten für jede der seismischen Spuren des anfänglichen Teilsatzes;
    - (S32) Bestimmen einer seismischen Horizontfläche für jeden Anfangswert jeder seismischen Spur des anfänglichen Teilsatzes;
    - (S33) Bestimmen eines zwischenzeitlichen Bildes einer relativen geologischen Zeit, RGT, auf Basis der seismischen Horizontflächen, die für den anfänglichen Teilsatz von seismischen Spuren bestimmt wurden;
    - (S34) Aktualisieren des zwischenzeitlichen RGT-Bildes durch Verwenden zusätzlicher seismischer Horizontflächen, die für Anfangswerte von seismischen Spuren eines nachfolgenden Teilsatzes, die nicht in dem anfänglichen Teilsatz enthalten sind, bestimmt werden, um ein endgültiges RGT-Bild zu erhalten.

2.  - Verfahren (30) nach Anspruch 1, wobei das Auswählen des anfänglichen Teilsatzes Folgendes umfasst:

- (S300) Auswählen eines deterministischen Teilsatzes von seismischen Spuren durch Auswählen von seismischen Spuren in dem Begutachtungsvolumen auf eine deterministische Weise;
- (S301) Auswählen eines zufälligen Teilsatzes von seismischen Spuren durch Auswählen von seismischen Spuren in dem Begutachtungsvolumen auf eine zufällige Weise;

wobei der anfängliche Teilsatz den deterministischen Teilsatz und den zufälligen Teilsatz umfasst.

3. - Verfahren (30) nach Anspruch 2, wobei der deterministische Teilsatz mindestens $N_{st}$ umgrenzende seismische Spuren umfasst, $N_{st} \geq 4$, die regelmäßig über die vertikale Umrandung des Begutachtungsvolumens verteilt sind.

4. - Verfahren (30) nach einem der Ansprüche 2 bis 3, wobei der deterministische Teilsatz eine Vielzahl von nicht umgrenzenden seismischen Spuren umfasst, die regelmäßig im Inneren der vertikalen Umrandung verteilt sind.

5. - Verfahren (xx) nach einem der Ansprüche 2 bis 4, wobei mindestens einige der umgrenzenden und/oder nicht umgrenzenden seismischen Spuren des deterministischen Teilsatzes auf Basis eines vorherbestimmten regelmäßigen horizontalen rechtwinkligen Gitters oder eines vorherbestimmten regelmäßigen horizontalen radialen Gitters ausgewählt sind.

6. - Verfahren (30) nach einem der Ansprüche 2 bis 5, wobei der deterministische Teilsatz seismische Spuren umfasst, die sich auf $K_p$ nicht-parallelen vertikalen Ebenen befinden, die eine gemeinsame Referenzachse im Inneren des Begutachtungsvolumens schneiden, wobei die seismischen Spuren des deterministischen Teilsatzes, die sich auf den $K_p$ vertikalen Ebenen befinden, für jede der $K_p$ vertikalen Ebenen die umgrenzenden seismischen Spuren in der vertikalen Ebene und mindestens eine zusätzliche nicht umgrenzende seismische Spur in der vertikalen Ebene umfassen.

7. - Verfahren (30) nach Anspruch 6, wobei der deterministische Teilsatz die seismische Spur umfasst, die der gemeinsamen Referenzachse entspricht.

8. - Verfahren (30) nach Anspruch 6 oder 7, wobei der deterministische Teilsatz nicht umgrenzende seismische Spuren umfasst, die sich jeweils auf einer vertikalen Eben aus den $K_p$ nicht-parallelen vertikalen Ebenen befinden, in gleicher Distanz zwischen der Referenzachse und einer umgrenzenden seismischen Spur, die sich auf der vertikalen Ebene befindet.

9. - Verfahren (30) nach einem der vorhergehenden Ansprüche, wobei das Aktualisieren des zwischenzeitlichen RGT-Bildes iterativ durchgeführt wird, durch progressives Verwenden von seismischen Horizontflächen, die für Anfangswerte weiterer seismischer Spuren des nachfolgenden Teilsatzes bestimmt werden, bis ein Stoppkriterium bestätigt wird, wodurch das endgültige RGT-Bild erhalten wird.

10. - Verfahren (30) nach einem der vorhergehenden Ansprüche, wobei die für das Aktualisieren des zwischenzeitlichen RGT-Bildes verwendeten seismischen Spuren seismische Spuren sind, die zufällig aus den seismischen Spuren des nachfolgenden Teilsatzes ausgewählt sind.

11. - Verfahren (30) nach einem der vorhergehenden Ansprüche, wobei jeder zum Bestimmen einer seismischen Horizontfläche verwendete Anfangswert einer seismischen Spur ein Pixel ist, das einem lokalen Extremwert der seismischen Spur entspricht.

12. - Verfahren (30) nach Anspruch 11, wobei die für die seismischen Spuren des anfänglichen Teilsatzes bestimmten Anfangswerte all den Pixeln entsprechen, die lokalen Extremwerten der seismischen Spuren des anfänglichen Teilsatzes entsprechen.

13. - Computerprogrammprodukt, das Anweisungen umfasst, die bei ihrer Ausführung durch mindestens einen Prozessor den mindestens einen Prozessor dazu konfigurieren, ein Verarbeitungsverfahren (30) nach einem der vorhergehenden Ansprüche durchzuführen.

14. - Computerlesbares Speichermedium, das Anweisungen umfasst, die bei ihrer Ausführung durch mindestens einen Prozessor den mindestens einen Prozessor dazu konfigurieren, ein Verarbeitungsverfahren (30) nach einem der Ansprüche 1 bis 12 durchzuführen.

**15.** - Computersystem zum Verarbeiten eines seismischen Bildes, wobei das Computersystem mindestens einen Prozessor umfasst, wobei der mindestens eine Prozessor dazu konfiguriert ist, ein Verarbeitungsverfahren (30) nach einem der Ansprüche 1 bis 12 durchzuführen.

**Revendications**

**1.** - Procédé (30) mis en œuvre par ordinateur pour le traitement d'une image sismique comprenant deux dimensions horizontales et une dimension verticale, et étant le résultat de mesures sismiques réalisées depuis la surface ou dans des puits de forages, l'image sismique comprenant un ensemble de traces sismiques s'étendant chacune le long de la dimension verticale, ledit ensemble de traces sismiques définissant un volume d'acquisition dans l'image sismique, ledit volume d'acquisition présentant une enveloppe verticale définie par des traces sismiques limites, ledit procédé comprenant :

- (S30) la sélection d'un sous-ensemble initial de traces sismiques parmi l'ensemble des traces sismiques, ledit sous-ensemble initial comprenant une pluralité de traces sismiques limites et une pluralité de traces sismiques non limites ;
- (S31) la détermination d'une pluralité de points d'amorçage pour chacune des traces sismiques du sous-ensemble initial ;
- (S32) la détermination d'une surface d'horizon sismique pour chaque point d'amorçage de chaque trace sismique du sous-ensemble initial ;
- (S33) la détermination d'une image de temps géologique relatif, RGT, intermédiaire sur la base des surfaces d'horizons sismiques déterminées pour le sous-ensemble initial de traces sismiques ;
- (S34) la mise à jour de l'image de RGT intermédiaire en utilisant des surfaces d'horizons sismiques complémentaires déterminées pour des points d'amorçage de traces sismiques d'un sous-ensemble ultérieur correspondant aux traces sismiques qui ne font pas partie du sous-ensemble initial, afin d'obtenir une image de RGT finale.

**2.** - Procédé (30) selon la revendication 1, dans lequel la sélection du sous-ensemble initial comprend :

- (S300) la sélection d'un sous-ensemble déterministe de traces sismiques en sélectionnant des traces sismiques dans le volume d'acquisition de manière déterministe ;
- (S301) la sélection d'un sous-ensemble aléatoire de traces sismiques en sélectionnant des traces sismiques dans le volume d'acquisition de manière aléatoire ;

dans lequel le sous-ensemble initial comprend le sous-ensemble déterministe et le sous-ensemble aléatoire.

**3.** - Procédé (30) selon la revendication 2, dans lequel le sous-ensemble déterministe comprend au moins $N_{st}$ traces sismiques limites, $N_{st} \geq 4$, qui sont réparties régulièrement sur l'enveloppe verticale du volume d'acquisition.

**4.** - Procédé (30) selon l'une quelconque des revendications 2 à 3, dans lequel le sous-ensemble déterministe comprend une pluralité de traces sismiques non limites qui sont réparties régulièrement à l'intérieur de l'enveloppe verticale.

**5.** - Procédé (xx) selon l'une quelconque des revendications 2 à 4, dans lequel au moins certaines des traces sismiques limites et/ou non limites du sous-ensemble déterministe sont sélectionnées sur la base d'une grille rectangulaire horizontale régulière prédéterminée ou d'une grille radiale horizontale régulière prédéterminée.

**6.** - Procédé (30) selon l'une quelconque des revendications 2 à 5, dans lequel le sous-ensemble déterministe comprend des traces sismiques situées sur $K_p$ plans verticaux non parallèles se recoupant au niveau d'un axe de référence commun à l'intérieur du volume d'acquisition, dans lequel les traces sismiques du sous-ensemble déterministe qui sont situées sur les $K_p$ plans verticaux comprennent, pour chacun des $K_p$ plans verticaux, les traces sismiques limites dans ledit plan vertical et au moins une trace sismique non limite complémentaire dans ledit plan vertical.

**7.** - Procédé (30) selon la revendication 6, dans lequel le sous-ensemble déterministe comprend la trace sismique qui correspond à l'axe de référence commun.

**8.** - Procédé (30) selon la revendication 6 ou 7, dans lequel le sous-ensemble déterministe comprend des traces sismiques non limites situées chacune sur un plan vertical parmi les $K_p$ plans verticaux non parallèles, à égale distance entre l'axe de référence et une trace sismique limite située sur ledit plan vertical.

9. - Procédé (30) selon l'une quelconque des revendications précédentes, dans lequel la mise à jour de l'image de RGT intermédiaire est effectuée de manière itérative en utilisant progressivement des surfaces d'horizons sismiques complémentaires déterminées pour des points d'amorçage de traces sismiques supplémentaires du sous-ensemble ultérieur, jusqu'à ce qu'un critère d'arrêt soit vérifié, obtenant ainsi l'image de RGT finale.

10. - Procédé (30) selon l'une quelconque des revendications précédentes, dans lequel les traces sismiques utilisées pour la mise à jour de l'image de RGT intermédiaire sont des traces sismiques sélectionnées de manière aléatoire parmi les traces sismiques du sous-ensemble ultérieur.

11. - Procédé (30) selon l'une quelconque des revendications précédentes, dans lequel chaque point d'amorçage d'une trace sismique utilisé pour déterminer une surface d'horizon sismique est un pixel qui correspond à un extrême local de ladite trace sismique.

12. - Procédé (30) selon la revendication 11, dans lequel les points d'amorçage déterminés pour les traces sismiques du sous-ensemble initial correspondent à tous les pixels qui correspondent à des extrêmes locaux desdites traces sismiques du sous-ensemble initial.

13. - Produit programme informatique comprenant des instructions qui, lorsqu'elles sont exécutées par au moins un processeur, configurent ledit au moins un processeur pour réaliser un procédé (30) de traitement selon l'une quelconque des revendications précédentes.

14. - Support de stockage lisible par ordinateur comprenant des instructions qui, lorsqu'elles sont exécutées par au moins un processeur, configurent ledit au moins un processeur pour réaliser un procédé (30) de traitement selon l'une quelconque des revendications 1 à 12.

15. - Système informatique pour le traitement d'une image sismique, ledit système informatique comprenant au moins un processeur configuré pour réaliser un procédé (30) de traitement selon l'une quelconque des revendications 1 à 12.

**Fig. 1**

**Fig. 2**

Fig. 3

☐ = intersections 41 (boundary)
■ = reference axis 42

Fig. 4

☐ = intersections 41 (boundary)
■ = reference axis 42
▨ = non-boundary

Fig. 5

a)

$L_{plane1}$

$L_{plane2}$

$x$

$y$

51    51

20    21    50    50

◙ = candidate points 52 (non-boundary)

b)

$x$

$y$

40    40    21    40    40

20

$L_{point}$

◙ = candidate points 52 (non-boundary)
☐ = candidate point 52 / reference axis 42

Fig. 6

a)

◪ = candidate points 52 (non-boundary)
☐ = candidate points 41 (boundary)

b)

◪ = candidate points 52 (non-boundary)
☐ = intersections 41 (boundary)

**Fig. 7**

**Fig. 8**

□ = deterministic subset
■ = random subset

**Fig. 9**

a)

b)

Fig. 10

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- EP 20306131

- FR 2869693

### Non-patent literature cited in the description

- **LOMASK et al.** Flattening without picking. *Geophysics*, July 2006, vol. 71 (4), 13-20

- **XINMING WU ; DAVE HALE**. Extracting horizons and sequence boundaries from 3D seismic images. *Society of Exploration Geophysicists*, 2013, 223-234